# EUROPÄISCHE PATENTSCHRIFT

(11) **EP 1 008 781 B1**
(45) Veröffentlichungstag und Bekanntmachung des Hinweises auf die Patenterteilung: **04.02.2004**
(21) Anmeldenummer: 99123409.7
(22) Anmeldetag: 24.11.1999
(51) Int. Cl.: F16F 1/38, B60G 11/12

(54) **Gelenklager, insbesondere Federaugenlager**
Pivot bearing, particulary spring eye bearing
Palier à articulation, en particulier palier d'oeillet de ressort

(30) Priorität: 09.12.1998 DE 19856694
(43) Veröffentlichungstag der Anmeldung: 14.06.2000
(73) Patentinhaber: Jörn ELZA GmbH, 71336 Waiblingen (DE)
(72) Erfinder: Zawadzki, Bernd, 71404 Korb (DE)
(74) Vertreter: Neubauer, Hans-Jürgen, Dipl.-Phys.

(56) Entgegenhaltungen:
- EP-A- 0 493 731
- US-A- 2 572 160
- US-A- 2 749 160
- US-A- 3 608 049
- US-A- 5 820 115

## Beschreibung

Die Erfindung betrifft ein Gelenklager, insbesondere ein Federaugenlager nach dem Oberbegriff des Anspruchs 1.

Ein durch Vorbenutzung bekanntes, gattungsgemäßes Gelenklager als Federaugenlager einer Blattfederlagerung umfaßt eine zylindrische Gelenkbuchse, bestehend aus wenigstens einem radial inneren, stabilen und dickwandigen Stahlrohr, auf dessen zylindrischer Außenfläche eine Gummischicht aufvulkanisiert ist. Als erstes, karosserieseitiges Lagerteil sind zwei beabstandete, durch einen Befestigungsbolzen verbundene Halteplatten als Bauteile eines Federgehänges einer Blattfederlagerung eines Nutzfahrzeugs vorgesehen.

Das Federauge der Blattfeder bildet ein Aufnahmeauge als zweites Lagerteil, in das die zylindrische, im Herstellzustand zumindest in Teilbereichen im Durchmesser größere Gelenkbuchse unter radialer Vorspannung der Gummischicht zur Herstellung einer verdrehfesten Verbindung zwischen der Gelenkbuchse und dem Aufnahmeauge eingepreßt ist. Die vorstehende Anordnung ist mittels einer Befestigungsschraube zwischen den Halteplatten eingespannt, dergestalt, daß der Befestigungsbolzen als Schraubenbolzen im Stahlrohr aufgenommen ist und sich mit einem Bolzenkopf an der Außenseite einer Halteplatte und mit einer Schraubenmutter an der Außenseite der anderen Halteplatte abstützt. Dabei ist die axiale Verspannlänge durch die Länge des Stahlrohres vorgegeben, das fest und unverdrehbar zwischen den Halteplatten eingespannt ist.

Weiter ist in einer modifizierten Ausführungsform eines solchen Gelenklagers ein Kunststoffrohr formschlüssig in das Stahlrohr eingesteckt, das lediglich dazu dient, den inneren Durchmesser des äußeren Stahlrohres auf den Durchmesser des Schraubenbolzens der Befestigungsschraube zu reduzieren und dadurch das Gelenklager zu zentrieren. Die Einspannkraft und Haltekraft zwischen den Halteplatten wird auch hier durch das fest und unverdrehbar eingespannte äußere Stahlrohr aufgenommen und abgestützt.

Relativbewegungen zwischen dem ersten und zweiten Lagerteil werden ausschließlich molekular in der Gummischicht aufgenommen. Eine durchrutschende Verbindung zwischen dem ersten und zweiten Lagerteil ist hier nach der Montage weder vorgesehen noch möglich.

Daher ist die Montage als Federaugenlager aufwendig und kostenintensiv, da eine Blattfeder auf die statische Belastung vorgespannt und dann die Befestigungsschrauben angezogen werden müssen, wodurch sich die Mittellage für die beidseitig möglichen Einfederungen ergibt, so daß die Gummischicht im Fahrbetrieb ausgehend von dieser Mittellage nicht übermäßig beansprucht wird. Zudem besteht bei einem solchen Gelenklager kein Überlastschutz für Extremeinfederungen.

Bei diesen bekannten Gelenklagern ist im Herstellzustand der Gelenkbuchse die Gummischicht in den axialen Endbereichen zu umlaufenden, radial abstehenden Gummiwülsten verdickt. Die axiale Länge des Aufnahmeauges ist geringer als die der Gelenkbuchse. Im eingepreßten Zustand der Gelenkbuchse liegt das Aufnahmeauge mit abgerundeten Stirnseiten zwischen den unter Vorspannung daran anliegenden Gummiwülsten. Zudem sind die Gummiwülste so dimensioniert, daß sie im montierten Zustand, ebenso wie die Stirnseiten der Gummischicht unter Vorspannung an den Halteplatten anliegen. Damit wird eine mittige Halterung des Aufnahmeauges zwischen den Halteplatten erreicht mit einer jeweils zwischengeschalteten Gummischicht zwischen den Stirnseiten des Aufnahmeauges und den Halteplatten, die insbesondere auch die axiale Steifigkeit bestimmen.

Die vorbeschriebenen, gattungsgemäßen Gelenklager werden insbesondere für Blattfederlagerungen an leichteren Nutzfahrzeugen bis ca. 15 t verwendet. Für schwere Nutzfahrzeuge sind andere Ausführungen bekannt, wie z. B. Buchsenanordnungen mit Stützringen an Gummischichtstirnseiten und einem längsgeschlitzten, äußeren Metallrohr (EP 0 493 731 B1).

Aufgabe der Erfindung ist es, ein Gelenklager, insbesondere als Federaugenlager einer Blattfeder zu schaffen, das bei guter Funktion einfach und kostengünstig montierbar ist.

Diese Aufgabe wird mit den Merkmalen des Anspruchs 1 gelöst.

Gemäß Anspruch 1 umfaßt die Gelenkbuchse weiter ein äußeres Rohrteil als Kunststoffrohr auf dessen Innenfläche die Gummischicht festhaftend angebracht, vorzugsweise aufvulkanisiert ist, wobei das Kunststoffrohr und die Gummischicht zusammen ein Buchsenteil bilden. Zur Komplettierung der Gelenkbuchse ist in das Buchsenteil das innere Stahlrohr mit Anlage zur Gummischicht axial eingesteckt. Dabei kann ggf. durch Verdrängung von Gummi in der Gummischicht bereits eine Vorspannung zum umgebenden Kunststoffrohr hin aufgebaut werden. Mit dem Begriff "Gummi" sollen auch ähnliche Elastomermaterialien umfaßt sein.

Im fertig montierten Zustand ist die Gelenkbuchse in das Aufnahmeauge eingepreßt. Vor dem Einpressen ist der Außendurchmesser der Gelenkbuchse, bzw. des äußeren Kunststoffrohrs größer als der Innendurchmesser des Aufnahmeauges. Beim und nach dem Einpressen wird das äußere Kunststoffrohr plastisch verformt dergestalt, daß sich durch Fließen und Setzen des Kunststoffs eine spaltlose, flächige und verdrehfeste Anlageverbindung zum umgebenden Aufnahmeauge ausbildet.

Im fertig montierten Zustand des Gelenklagers wird ggf. durch die plastische Verformung und Durchmesserverringerung des eingepreßten Kunststoffrohrs eine Vorspannung in der Gummischicht aufgebaut und/oder erhöht. Die entsprechenden Geometrie- und Materialdimensionieren sind dabei so durchgeführt, daß durch diese Vorspannung zwischen der Gummischicht und dem inneren Stahlrohr eine Reibschlußverbindung vorliegt, die bei normal vorgesehenen Betriebsbedingungen bis zu einem bestimmten, vorgegebenen Losbrechmoment unverdrehbar hält. Damit werden Lagerbewegungen, insbesondere Drehbewegungen zwischen den beiden Lagerteilen vorteilhaft nur molekular in der Gummischicht aufgenommen. Bei einer großen Drehbelastung über dem Losbrechmoment rutscht jedoch die Gummischicht auf dem Stahlrohr zum Abbau dieser großen Drehbelastung in eine weniger belastete, jedoch dort wieder drehfest gehaltene Position, in der weitere Lagerbewegungen wieder molekular in der Gummischicht aufgenommen werden. Dies stellt einerseits einen Überlastungsschutz dar und ist besonders vorteilhaft bei der Montage von Blattfedern verwendbar: die Blattfedern müssen am Fahrzeug nicht mehr im betriebsmäßig vorgespannten Zustand montiert werden, da sich die Gelenklager beim Aufstellen des Fahrzeugs auf die Räder mittels Durchrutschen selbsttätig auf eine Nullage entsprechend der statischen Belastung einstellen.

Ein besonderer Vorteil des Gelenklagers besteht auch darin, daß im plastisch verformbaren Kunststoffrohr Durchmessertoleranzen, Unrundheiten, etc. des Aufnahmeauges bei der plastischen Verformung aufgenommen werden. Dies führt besonders bei Federaugenlagern zu kostengünstigen Anordnungen und Montagen, da Bearbeitungen des Federauges, beispielsweise durch zylindrisches Ausdrehen, nur mit relativ geringer Genauigkeit erforderlich sind oder völlig unbearbeitete Federaugen verwendbar sind. Damit ist eine Kostenreduzierung bei der Federaugenherstellung durch den Wegfall mechanischer Bearbeitungen möglich, wobei die Gelenkbuchse selbst ebenfalls kostengünstig herstellbar ist.

Ein besonders geeignetes Kunststoffrohr wird mit Anspruch 2 als glasfaserverstärktes Polyamidrohr vorgeschlagen.

Nach Anspruch 3 umfaßt das erste Lagerteil weiter zwei beabstandete Halteplatten, insbesondere als Bauteile eines Federgehänges einer Blattfederlagerung eines Nutzfahrzeugs. Zwischen diese Halteplatten ist mittels des Befestigungsbolzens einer Schraubverbindung das innere Stahlrohr verdrehfest eingespannt. Die axiale Länge des Stahlrohres ist dabei größer als die axiale Länge des mittig angebrachten Aufnahmeauges, damit zwischen den Halteplatten genügend Platz für Lagerbewegungen des Aufnahmeauges ist.

Für eine axiale Abstützung und Lagerführung sind an beiden Endseiten des Stahlrohrs im noch nicht in das Federauge eingepreßten Zustand der Gelenkbuchse Stützringe mit einem Preßsitz aufgepreßt. Diese Stützringe können aus Metall oder in einer preiswerteren Ausführung auch aus Kunststoff hergestellt sein. Die Stützringe sind so weit aufgepreßt, daß jeweils ein Freiraum zur benachbarten Stirnseite der Gummischicht vorliegt, in den beim Einpressen der Gelenkbuchse in das Aufnahmeauge der Gummi verdrängt wird, so daß eine Anlage und axiale Abstützung zwischen Gummischicht und Stützringen erfolgt. Damit wird insbesondere bei Blattfedern eine gute Längsführung erreicht.

Gemäß Anspruch 5 ist im Anlagebereich der Gummischicht zum Stahlrohr ein Zwischenblech als dünnes, gerolltes Blechrohr einvulkanisiert, wobei auf der radial inneren Seite des Blechrohrs eine relativ dünne Gummifilmauflage zur Anlage am Stahlrohr vorgesehen ist. Durch diese Gummifilmauflage wird einerseits eine sichere, verdrehfeste Reibschlußverbindung bis zum vorbestimmten Losbrechmoment erreicht und andererseits ein gezieltes Durchrutschen oberhalb des Losbrechmoments in eine dann wieder verdrehfeste Lage ermöglicht. Zweckmäßig liegen dabei nach Anspruch 6 die Stützringe jeweils an den Blechrohrstirnseiten an, wobei dies insbesondere auch eine Justierhilfe beim Aufpressen der Stützringe darstellt.

In einer besonders vorteilhaften Weiterbildung nach Anspruch 7 ist die radiale Materialstärke der Stützringe etwas geringer als die Gummischichtdicke und das Kunststoffrohr übergreift mit axialen, stirnseitigen Überständen und radialen Spalten jeweils die Stützringe. Geringe radiale und kardanische Lagerbewegungen werden im Rahmen der radialen Spalte molekular in der Gummischicht aufgenommen. Bei entsprechenden größeren Bewegungen legt sich dagegen das Kunststoffrohr mit seinen seitlichen Überständen als Überlastungsschutz an den Stützringumfängen an.

Nach Anspruch 8 wird das Gelenklager vorteilhaft als Federaugenlager verwendet, wobei dabei das Federauge je nach den Gegebenheiten zylindrisch ausgedreht oder auch unbearbeitet einsetzbar ist. Bedingt durch den Gieß- und Rollvorgang bei gerollten Federaugen treten im unbearbeiteten Zustand regelmäßig Durchmesserverringerungen im Bereich der axialen Augenlängsmitte auf. Um hier von vorneherein eine verbesserte Anpassung und Toleranzaufnahme im Kunststoffrohr zu gewährleisten, kann es je nach den Gegebenheiten zweckmäßig sein, das Kunststoffrohr zumindest im Außenflächenbereich nach Anspruch 9 mit einer entsprechenden Einschnürung zu versehen.

Anhand einer Zeichnung wird ein Ausführungsbeispiel der Erfindung näher erläutert.

Es zeigen:
- Fig. 1: einen Längsschnitt durch ein zylindrisches Buchsenteil im Herstellzustand,
- Fig. 2: eine Ansicht des Buchsenteils nach Fig. 1 in axialer Richtung,
- Fig. 3: eine vergrößerte Darstellung des Ausschnitts A aus Fig. 1,
- Fig. 4: einen Längsschnitt durch eine komplettierte Gelenkbuchse im Herstellzustand,
- Fig. 5: eine axiale Ansicht der Gelenkbuchse nach Fig. 4,
- Fig. 6: einen Längsschnitt durch ein fertig montiertes Gelenklager, und
- Fig. 7: einen Querschnitt entlang der Linie A-A aus Fig. 6.

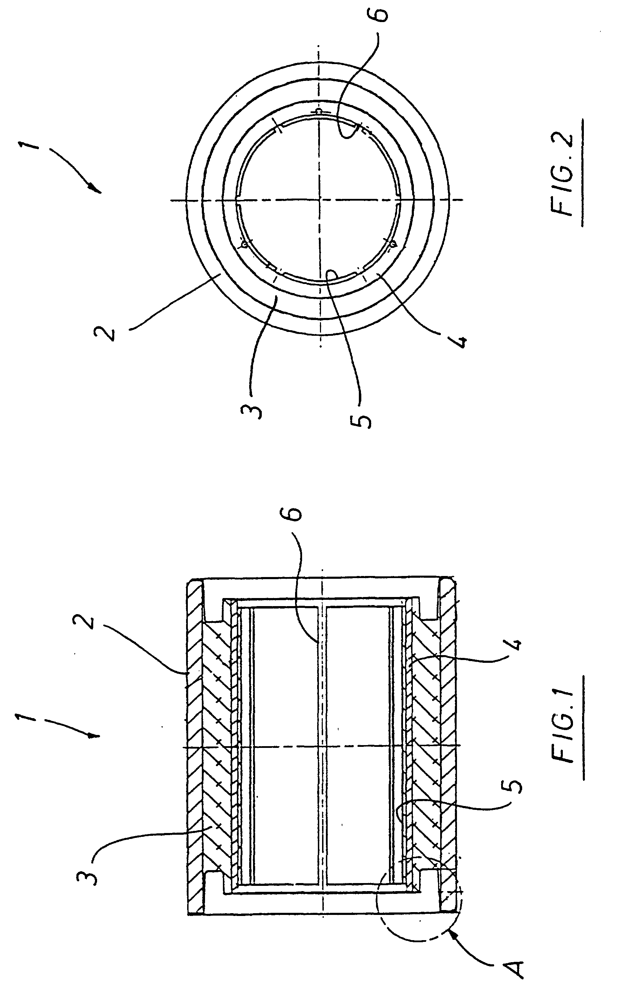

In den Fig. 1 und 2 ist ein zylindrisches Buchsenteil 1 dargestellt, das aus einem Kunststoffrohr 2 mit einer an dessen Innenfläche anvulkanisierten Gummischicht 3 und aus einem dünnen Blechrohr 4 besteht. Das Blechrohr 4 liegt unmittelbar im Bereich der Innenfläche der Gummischicht 3 und trägt auf seiner Innenseite einen Gummifilm 5, der durch schmale Längsausnehmungen 6 durchgehend bis zum Blechrohr 4 in Segmente aufgeteilt ist.

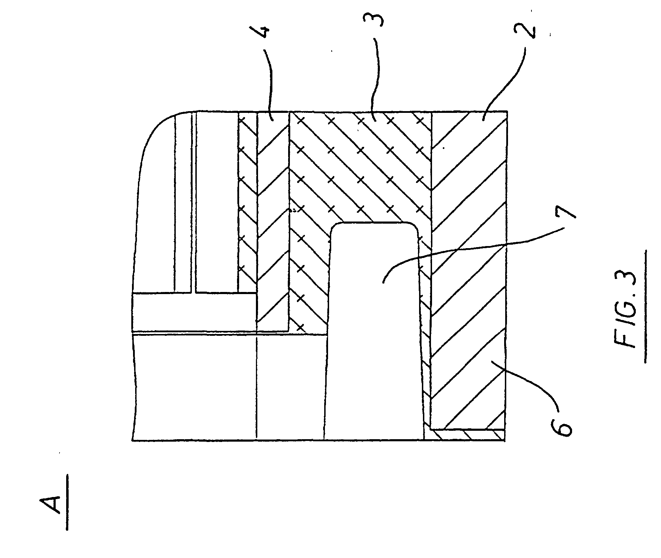

Wie insbesondere auch aus der vergrößerten Einzelheit A gemäß Fig. 3 zu ersehen ist, hat das Kunststoffrohr 2 eine größere Länge als das Blechrohr und steht jeweils stirnseitig mit einem Überstand 6 über den Bereich des Blechrohrs 4 vor. Zudem ist jeweils stirnseitig in der Gummischicht 3 ein Freiraum 7 eingeformt, an dem die Gummischicht 3 stirnseitig umlaufend zurückversetzt ist.

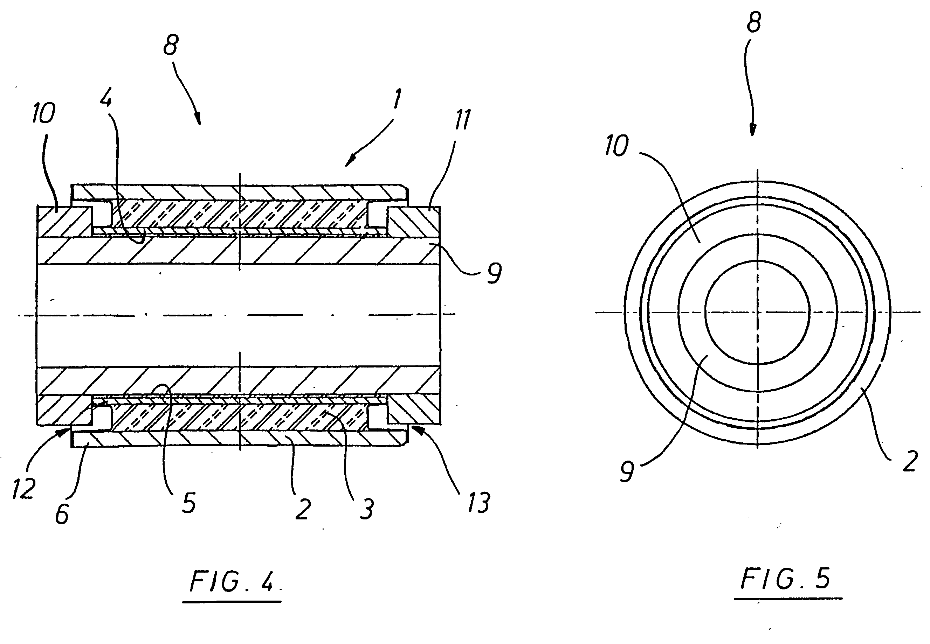

In den Fig. 4 und 5 ist das Buchsenteil 1 bereits zu einer Gelenkbuchse 8 komplettiert. Dazu ist in das Buchsenteil 1 ein inneres, dickwandiges und stabiles Stahlrohr 9 eingesteckt, das länger als das Kunststoffrohr 2 ist und dieses jeweils seitlich überragt. Die Außenfläche des Stahlrohrs 9 liegt dabei formschlüssig ggf. bereits mit Vorspannung an der Innenseite der Gummischicht 3 bzw. am Gummifilm 5 an. Zudem ist an jeder Endseite des Stahlrohrs 9 ein Stützring 10, 11 mit einem Preßsitz aufgepreßt, wobei sich jeder Stützring 10, 11 axial zwischen den Stirnseiten des Blechrohrs 4 und des längeren Stahlrohrs 9 erstreckt. Die radiale Materialstärke der Stützringe 10, 11 ist etwas geringer als die Gummischichtstärke [inkl. der Stärke des dünnen Blechrohrs 4 und des Gummifilms 5), so daß das Kunststoffrohr 2 unter Ausbildung radialer Spalte 12, 13 die Stützringe 10, 11 mit den stirnseitigen Überständen 6 axial übergreift.

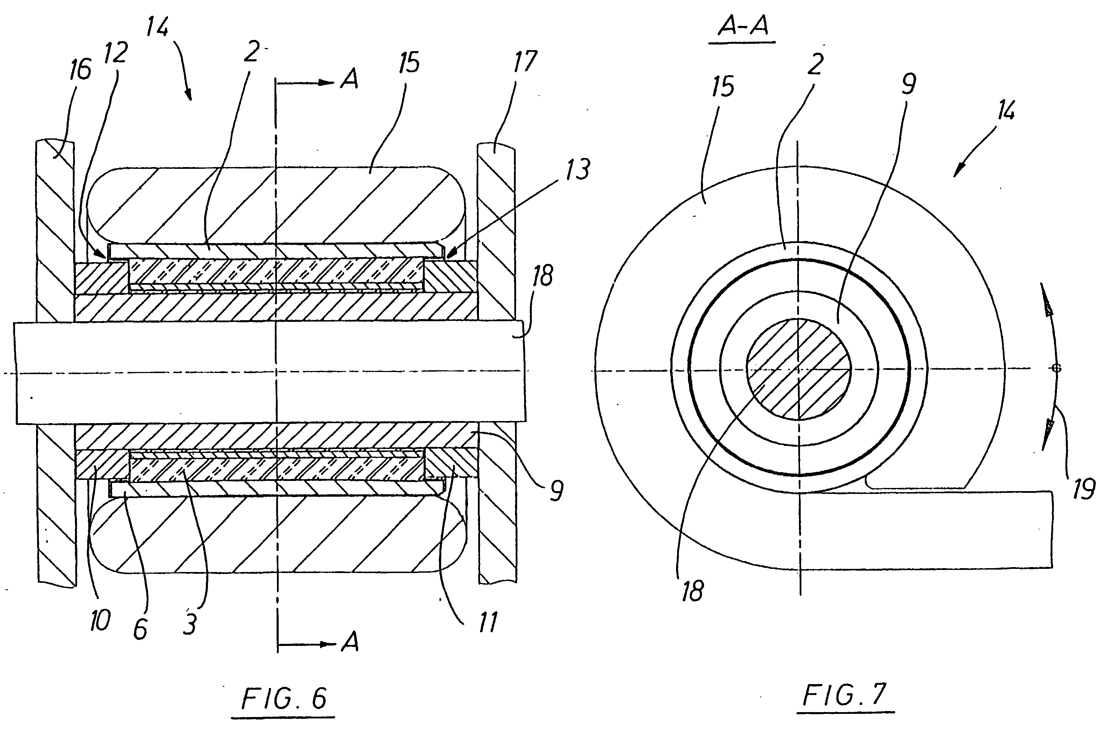

In den Fig. 6 und 7 ist ein fertig montiertes Gelenklager als Federaugenlager 14 dargestellt. Dabei ist die Gelenkbuchse 8 in ein Aufnahmeauge als Federauge 15 eingepreßt. Zudem sind zwei beabstandete Halteplatten 16, 17 eines Federgehänges einer Blattfederlagerung vorgesehen, zwischen die das Stahlrohr 9 verdrehfest mittels eines im Stahlrohr 9 formschlüssig aufgenommenen Schraubenbolzens 18 einer (nicht näher dargestellten) Verschraubung eingespannt ist. Die Halteplatten 16, 17 mit dem Schraubenbolzen 18 bilden dabei ein erstes Lagerteil und das Federauge 15 stellt das zweite Lagerteil dar, das gegenüber dem ersten Lagerteil im wesentlichen Schwenkbewegungen um eine Nullage ausführt (Pfeil 19). Die axiale Länge des Aufnahmeauges 15 ist geringer als die Länge des Stahlrohrs 9, die den Abstand der beiden Halteplatten 16, 17 bestimmt.

Vor dem Einpressen der Gelenkbuchse 8 in das Federauge 15 ist der Außendurchmesser der Gelenkbuchse 8 bzw. des Kunststoffrohrs 2 größer als der Innendurchmesser des Aufnahmeauges. Beim und nach dem Einpressen wird daher das Kunststoffrohr 2 plastisch durch Fließen und Setzen verformt und bildet eine spaltlose, flächige und verdrehfeste Anlageverbindung zwischen dem Aufnahmeauge 15 und dem Kunststoffrohr 2 aus. Durchmessertoleranzen, Unrundheiten, Materialflächenausnehmungen, etc. werden dabei im Kunststoffmaterial zum Toleranzausgleich aufgenommen. Zudem erfolgt eine durch die jeweilige Dimensionierung vorgebbare Durchmesserverringerung des Innendurchmessers des Kunststoffrohrs 2, die zu einer Gummiverdrängung in der Gummischicht 3 führt. Diese Gummiverdrängung erfolgt in die vor dem Einpressen vorhandenen, stirnseitigen Freiräume 7, die nach dem Einpressen entsprechend Fig. 6 aufgefüllt sind. Dadurch liegen die seitlichen Stützringe 10, 11 stirnseitig an der Gummischicht 3 für eine gute Seitenführung und für eine verbesserte Abdichtung an.

Die Spalte 12, 13 werden beim Einpressvorgang in das Federauge 15 ebenfalls etwas verringert. Bei starken radialen Belastungen oder kardanischen Belastungen des Federauges 14 werden der oder die Spalte 12, 13 überwunden, so daß sich das Kunststoffrohr 2 in der Art eines Anschlags mit seinen Überständen 6 an den jeweiligen Stützring 10, 11 anlegt.

Die in der Gummischicht 3 aufgebaute Vorspannung ist so groß, daß die Gummischicht 3 bzw. der Gummifilm 5 auf dem Stahlrohr 9 durch Reibschluß bei normalen Betriebsbedingungen bis zu einem bestimmten Losbrechmoment drehfest gehalten ist. Lagerbewegungen (Pfeil 19) werden dabei molekular in der Gummischicht 3 aufgenommen. Wenn die Schwenkbelastung über dem Losbrechmoment liegt, rutscht die Gummischicht 3 über den Gummifilm 5 auf dem Stahlrohr 9 zum Abbau dieser großen Belastung in eine weniger belastete, jedoch dort wieder drehfest bis zum Losbrechmoment gehaltene Position durch. Diese Position bestimmt dann weiter die Nullage, um die Lagerschwenkbewegungen (Pfeil 19) molekular in der Gummischicht 3 aufgenommen werden.

## Patentansprüche

1. Gelenklager, insbesondere Federaugenlager,
mit einer zylindrischen Gelenkbuchse (8), die ein radial inneres, stabiles, dickwandiges Stahlrohr (9) und eine zylindrische Gummischicht (3) umfaßt,
mit einem Befestigungsbolzen (18), der im Stahlrohr (9) aufgenommen ist und ein Bauteil eines ersten Lagerteils bildet,
mit einem Aufnahmeauge ( 15) als zweites Lagerteil, insbesondere einem Federauge einer Blattfeder, in das die zylindrische, im Herstellzustand im Durchmesser größere Gelenkbuchse (8) unter radialer Vorspannung zur Herstellung einer verdrehfesten Verbindung zwischen der Gelenkbuchse (8) und dem Aufnahmeauge (15) eingepreßt ist,
**dadurch gekennzeichnet,**
**daß** die Gelenkbuchse (8) ein äußeres Rohrteil als Kunststoffrohr (2) aufweist, auf dessen Innenfläche die Gummischicht (3) festhaftend angebracht, vorzugsweise aufvulkanisiert ist, wobei das Kunststoffrohr (2) und die Gummischicht (3) ein Buchsenteil (1) bilden,
**daß** in das Buchsenteil (1) mit Anlage zur Gummischicht (3) das innere Stahlrohr (9) zur Komplettierung der Gelenkbuchse (8) eingesteckt ist,
**daß** die Gelenkbuchse (8) in das Aufnahmeauge (15) eingepreßt ist, wobei das vor dem Einpressen im Außendurchmesser gegenüber dem Innendurchmesser des Aufnahmeauges (15) größere Kunststoffrohr (2) über eine plastische Verformung durch Fließen und Setzen eine spaltlose, flächige und verdrehfeste Anlageverbindung zum umgebenden Aufnahmeauge (15) bildet, und
**daß** durch eine radiale und/oder axiale Gummiverdrängung in der Gummischicht (3) durch das in das Buchsenteil (1) eingesteckte Stahlrohr (9) und/oder das in das Aufnahmeauge (15) eingepreßte Kunststoffrohr (2) eine Vorspannung in der Gummischicht (3) aufgebaut ist dergestalt, daß die Gummischicht (3) auf dem inneren Stahlrohr (9) durch Reibschluß bei normal vorgesehenen Betriebsbedingungen bis zu einem bestimmten Losbrechmoment drehfest gehalten ist und Lagerbewegungen molekular in der Gummischicht (3) aufgenommen werden und daß bei einer großen Drehbelastung über dem Losbrechmoment die Gummischicht (3) auf dem Stahlrohr (9) zum Abbau dieser großen Drehbelastung in eine weniger belastete, jedoch dort wieder drehfest gehaltene Position durchrutscht.

2. Gelenklager nach Anspruch 1, **dadurch gekennzeichnet, daß** das Kunststoffrohr (2) ein glasfaserverstärktes Polyamidrohr ist.

3. Gelenklager nach Anspruch 1 oder Anspruch 2, **dadurch gekennzeichnet, daß** das erste Lagerteil weiter zwei beabstandete Halteplatten [16, 17), insbesondere als Bauteile eines Federgehänges einer Blattfederlagerung eines Nutzfahrzeugs umfaßt, zwischen die das innere Stahlrohr (9) mittels des Befestigungsbolzens (18) einer Schraubverbindung verdrehfest eingespannt ist, wobei die axiale Länge des Stahlrohrs (9) größer als die axiale Länge des Aufnahmeauges (15) ist.

4. Gelenklager nach einem der Ansprüche 1 bis 3, **dadurch gekennzeichnet,**
**daß** an beiden Endseiten des Stahlrohrs (9), im noch nicht in das Aufnahmeauge (15) eingepreßten Zustand der Gelenkbuchse (8), Stützringe (10, 11) mit einem Preßsitz aufgepreßt sind mit jeweils einem axialen Freiraum (7) zur jeweils benachbarten Stirnseite der Gummischicht (3), und
**daß** nach dem Einpressen der Gelenkbuchse (8) in das Aufnahmeauge (15) der Gummi der Gummischicht (3) in die beidseitigen Freiräume (7) so verdrängt ist, daß eine Anlage und axiale Abstützung zwischen Gummischicht (3) und Stützringen (10, 11) erfolgt.

5. Gelenklager nach Anspruch 4, **dadurch gekennzeichnet, daß** im Anlagebereich der Gummischicht (3) zum Stahlrohr (9) ein Zwischenblech als dünnes Blechrohr (4) einvulkanisiert ist mit einem radial inneren Gummifilm (5) zur Anlage am Stahlrohr (9).

6. Gelenklager nach Anspruch 5, **dadurch gekennzeichnet, daß** an den Blechrohrstirnseiten jeweils die Stützringe (10, 11) anliegen.

7. Gelenklager nach einem der Ansprüche 4 bis 6, **dadurch gekennzeichnet, daß** die radiale Materialstärke der Stützringe (10, 11) etwas geringer als die Gummischichtdicke ist und das Kunststoffrohr (2) mit axialen, stirnseitigen Überständen (6) und radialen Spalten (12, 13) die Stützringe (10, 11) jeweils übergreift.

8. Gelenklager nach einem der Ansprüche 1 bis 7, **dadurch gekennzeichnet, daß** das Aufnahmeauge ein zylindrisch ausgedrehtes oder unbearbeitetes Federauge (15) ist.

9. Gelenklager nach einem der Ansprüche 1 bis 8, **dadurch gekennzeichnet, daß** das Kunststoffrohr (2) jeweils zur Längsmitte hin eine etwa doppelkonusförmige Einschnürung aufweist.

## Claims

1. Pivoting bearing, in particular a spring eye-type bearing, having a cylindrical pivoting bush (8) which comprises a radially inner, robust, thick-walled steel tube (9) and a cylindrical rubber layer (3), having a fastening bolt (18) which is accommodated in the steel tube (9) and forms a component of a first bearing part, having a locating eye (15) as second bearing part, in particular a spring eye of a leaf spring, into which eye the cylindrical pivoting bush (8), which is larger in diameter in the manufactured state, is pressed under radial prestress for producing a rotationally fixed connection between the pivoting bush (8) and the locating eye (15), **characterized in that** the pivoting bush (8) has an outer tubular part as plastic tube (2), to the inner surface of which the rubber layer (3) is attached in a firmly adhering manner, preferably vulcanized in place, the plastic tube (2) and the rubber layer (3) forming a bush part (1), **in that** the inner steel tube (9), for completing the pivoting bush (8), is inserted into the bush part (1) such as to be in contact with the rubber layer (3), **in that** the pivoting bush (8) is pressed into the locating eye (15), the plastic tube (2), which before the pressing-in is larger in outside diameter relative to the inside diameter of the locating eye (15), forming a gap-less, full-surface and rotationally fixed contact connection with the surrounding locating eye (15) via plastic deformation by flowing and setting, and **in that**, by a radial and/or axial rubber displacement in the rubber layer (3) by the steel tube (9) inserted into the bush part (1) and/or by the plastic tube (2) pressed into the locating eye (15), a prestress is built up in the rubber layer (3) in such a way that the rubber layer (3) is held in a rotationally fixed manner on the inner steel tube (9) by friction grip during operating conditions normally provided up to a certain breakaway torque and bearing movements are absorbed molecularly in the rubber layer (3), and **in that**, during a high rotational load beyond the breakaway torque, the rubber layer (3), to reduce this high rotational load, slips on the steel tube (9) into a position which is subjected to a lower load but is held there again in a rotationally fixed manner.

2. Pivoting bearing according to Claim 1, **characterized in that** the plastic tube (2) is a glass-fibre-reinforced polyamide tube.

3. Pivoting bearing according to Claim 1 or Claim 2, **characterized in that** the first bearing part, furthermore, comprises two spaced-apart retaining plates (16, 17), in particular as components of a spring hanger of a leaf-spring mounting of a commercial vehicle, between which the inner steel tube (9) is clamped in place in a rotationally fixed manner by means of the fastening bolt (18) of a screwed connection, the axial length of the steel tube (9) being greater than the axial length of the locating eye (15).

4. Pivoting bearing according to one of Claims 1 to 3, **characterized in that**, in the state in which the pivoting bush (8) is not yet pressed into the locating eye (15), supporting rings (10, 11) are pressed in place with an interference fit on both end sides of the steel tube (9) with in each case an axial clearance space (7) relative to the respectively adjacent end face of the rubber layer (3), and **in that**, after the pivoting bush (8) has been pressed into the locating eye (15), the rubber of the rubber layer (3) is displaced into the clearance spaces (7) on both sides in such a way that contact and axial support is effected between rubber layer (3) and supporting rings (10, 11).

5. Pivoting bearing according to Claim 4, **characterized in that**, in the contact region between the rubber layer (3) and the steel tube (9), an intermediate sheet, as thin sheet-metal tube (4), is vulcanized in place with a radially inner rubber film (5) for contact with the steel tube (9).

6. Pivoting bearing according to Claim 5, **characterized in that** the supporting rings (10, 11) bear in each case against the end faces of the sheet-metal tube.

7. Pivoting bearing according to one of Claims 4 to 6, **characterized in that** the radial material thickness of the supporting rings (10, 11) is slightly smaller than the rubber-layer thickness, and the plastic tube (2) in each case overlaps the supporting rings (10, 11) with axial, end-face projecting lengths (6) and radial gaps (12, 13).

8. Pivoting bearing according to one of Claims 1 to 7, **characterized in that** the locating eye is a cylindrically bored or unmachined spring eye (15).

9. Pivoting bearing according to one of Claims 1 to 8, **characterized in that** the plastic tube (2) in each case has an approximately double-cone-shaped constriction towards the longitudinal centre.

## Revendications

1. Palier à articulation, en particulier palier d'oeillet de ressort,
avec un coussinet à articulation (8) cylindrique, comprenant un tube d'acier (9) à paroi épaisse, stable, radialement intérieure et une couche de caoutchouc (3) cylindrique,
avec un boulon de fixation (18) qui est logé dans le tube en acier (9) et forme un composant d'une première partie de palier,
avec un oeillet de logement (15) faisant office de deuxième partie de palier, en particulier un oeillet de ressort d'un ressort à lames, dans lequel le coussinet à articulation (8) cylindrique de plus grand diamètre, lorsqu'il est à l'état fabriqué, est enfoncé sous précontrainte radiale pour produire une liaison assujettie en rotation entre le coussinet à articulation (8) et l'oeillet de logement (15),
**caractérisé en ce que** le coussinet à articulation (8) présente une partie tubulaire extérieure réalisée sous la forme de tube en matière synthétique (3), sur la surface intérieure de laquelle la couche de caoutchouc (3) est montée en étant fixée par adhésion, de préférence est rapportée par vulcanisation, sachant que le tube en matière synthétique (2) et la couche de caoutchouc (3) forment une partie de coussinet (1),
**en ce que** dans la partie de coussinet (1 ), avec appui par rapport à la couche de caoutchouc (3), le tube en acier (9) intérieur est enfiché pour compléter le coussinet à articulation (8),
**en ce que** le coussinet à articulation est enfoncé dans l'oeillet de logement (15), sachant que le tube en matière synthétique (8), de plus grand diamètre extérieur que le diamètre intérieur de l'oeillet de logement (15) avant enfoncement, forme, par le biais d'une déformation plastique par fluage et tassement, une liaison d'appui sans interstice, plate et rigide en torsion par rapport à l'oeillet de logement (15) environnant, et
**en ce que**, par un refoulement de caoutchouc radial et/ou axial dans la couche de caoutchouc (3), à travers le tube en acier enfiché dans la partie de coussinet (1) et/ou le tube en matière synthétique (2) enfoncé dans l'oeillet de logement (15), on établit dans la couche de caoutchouc (3) une précontrainte de manière que la couche de caoutchouc (3), par une friction dans des conditions de fonctionnement normal prévues, soit maintenue assujettie en rotation sur le tube en acier (9) intérieur jusqu'à un couple de rupture déterminé, et les déplacements du palier étant captés de façon moléculaire dans la couche en caoutchouc (3), et **en ce que**, en cas de grande charge de rotation par l'intermédiaire du couple de rupture, la couche de caoutchouc ripe (3) sur le tube en acier (9), pour détruire cette grande charge en rotation et en passant en une position moins chargée, mais en étant cependant de nouveau maintenue de façon assujettie en rotation.

2. Palier à articulation selon la revendication 1, **caractérisé en ce que** le tube en matière synthétique (2) est un tube en polyamide renforcé par des fibres de verre.

3. Palier à articulation selon la revendication 1 ou la revendication 2, **caractérisé en ce que** la première partie de palier comprend en outre deux plaques de maintien (16, 17) espacées l'une de l'autre, en particulier servant de composant à une suspension à ressort d'un montage sur ressorts à lames d'un véhicule utilitaire, plaques entre lesquelles le tube en acier intérieur (8) est enserré de façon assujettie en rotation à l'aide d'un boulon de fixation (18) d'une liaison filetée, la longueur axiale du tube d'acier (9) étant supérieure à la longueur axiale de l'oeillet de logement (15).

4. Palier à articulation selon l'une des revendications 1 à 3, **caractérisé en ce qu'**aux deux faces d'extrémité du tube d'acier (9), à l'état non encore enfoncé dans l'oeillet de logement (15) du coussinet à articulation (8) sont rapportées par pressage des bagues d'appuis (10, 11), avec un montage à ajustement avec serrage et avec chaque fois un espace libre (7) axial par rapport à la face frontale chaque fois voisine de la couche de caoutchouc (3), et après l'enfoncement du coussinet à articulation (8) dans l'oeillet de logement (15), le caoutchouc de la couche de caoutchouc (3) est refoulé dans les espaces libres (7) situés des deux côtés, de manière à obtenir un appui et un soutien axial entre la couche en caoutchouc (3) et les bagues d'appui (10, 11).

5. Palier à articulation selon la revendication 4, **caractérisé en ce que**, dans la zone d'appui de la couche en caoutchouc (3) par rapport au tube d'acier (9), est intégrée par vulcanisation une tôle intermédiaire réalisée sous la forme de tôle en acier (4) mince, avec un film en caoutchouc (5) radialement intérieur, pour assurer l'appui sur le tube d'acier (9).

6. Palier à articulation selon la revendication 5, **caractérisé en ce que** chaque fois les bagues d'appui (10, 11 ) sont en appui sur les faces frontales de tubes d'acier.

7. Palier à articulation selon l'une des revendications 4 à 6, **caractérisé en ce que** l'épaisseur de matériau radial des bagues d'appui (10, 11) est un peu inférieure à l'épaisseur de couche de caoutchouc et le tube de matière synthétique (2) entoure chaque fois les bagues d'appui (10, 11), par des dépassements (6) frontaux axiaux et des intervalles (12, 13) radiaux.

8. Palier à articulation selon l'une des revendications 1 à 7, **caractérisé en ce que** l'oeillet de logement est un oeillet de ressort (15) de forme cylindrique, obtenu par usinage ou sans usinage.

9. Palier à articulation selon l'une des revendications 1 à 8, **caractérisé en ce que** le tube de matière synthétique (2) présente un étranglement à peu près en forme de cône double, chaque fois en direction du centre longitudinal.
